Europäisches Patentamt

European Patent Office

Office européen des brevets

(19)

(11) Numéro de publication: **0 289 386 B1**

(12) **FASCICULE DE BREVET EUROPEEN**

(45) Date de publication du fascicule du brevet:
18.07.90

(51) Int. Cl.⁵: **F16K 11/10, H01H 33/34**

(21) Numéro de dépôt: 88400914.3

(22) Date de dépôt: 15.04.88

(54) Valve hydraulique à trois voies.

(30) Priorité: 29.04.87 FR 8706077

(43) Date de publication de la demande:
02.11.88 Bulletin 88/44

(45) Mention de la délivrance du brevet:
18.07.90 Bulletin 90/29

(84) Etats contractants désignés:
AT BE CH DE ES FR GB GR IT LI LU NL SE

(56) Documents cités:
DE-A- 2 654 035
FR-A- 2 201 420
FR-A- 2 539 465
GB-A- 178 232

(73) Titulaire: Gratzmuller, Claude Alain, 30, avenue Georges
Mandel, F-75116 Paris Cédex(FR)

(72) Inventeur: Gratzmuller, Claude Alain, 30, avenue
Georges Mandel, F-75116 Paris Cédex(FR)

(74) Mandataire: Levy, David et al, c/o S.A.
Fedit-Loriot 38, avenue Hoche, F-75008 Paris(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une valve hydraulique à trois voies, à centre ouvert, destinée à raccorder sélectivement un circuit d'utilisation soit à une source à haute pression (position admission), soit a un réservoir à basse pression (position purge), ladite valve étant actionnée hydrauliquement par un vérin hydraulique pilote qui est mis en relation, par l'intermédiaire d'un circuit de contrôle, soit avec une source à haute pression,soit avec un réservoir à basse pression pour amener la valve dans l'une ou l'autre de ses positions.

Une telle valve trouve une application particulièrement importante dans le cas de la commande hydraulique des disjoncteurs électriques à haute tension et elle comporte en général dans ce cas un circuit hydraulique dit "d'auto-maintien" permettant d'appliquer un signal de pression fugitif au circuit de contrôle précité du vérin pilote, ce circuit d'auto-maintien maintenant la valve dans la position (admission ou purge) à laquelle l'a amené le signal de pression fugitif précité, après disparition de ce signal de pression.

Une valve de ce genre a été décrite dans le brevet FR-A 1 098 565 déposé le 15 janvier 1954 (ou brevet US-A 2 900 960) et elle est devenue classique pour la commande hydraulique des disjoncteurs électriques à haute tension.

Une telle valve devant être absolument étanche dans chacune de ses positions, admission ou purge, ne comporte pas des tiroirs, mais des clapets, à savoir, un clapet d'admission et un clapet de purge.

Dans sa réalisation classique, les clapets admission et purge nécessitent pour leur bonne conservation et leur fiabilité d'être parfaitement guidés de façon que leur application sur leurs sièges respectifs se produise toujours sur les mêmes empreintes ; par suite les deux clapets sont physiquement indépendants et ne réagissent l'un sur l'autre que par poussée ; le clapet admission, mobile du côté source haute pression par rapport au siège, étant poussé par un ressort et le clapet purge côté source basse pression par rapport à son siège étant poussé par ledit vérin hydraulique pilote.

De cette façon, en cas de manque de pression dans la source haute pression, le clapet admission est fermé sous l'effet de son ressort et le clapet purge est ouvert. En cas de mise en pression de la source haute pression, la valve est étanche et ne s'oppose pas à la mise en pression puisque, le clapet d'admission étant fermé, il n'y a pas de communication entre la haute pression et la purge.

Une particularité de ces valves, dans le cas de leur application à la commande des disjoncteurs à haute tension, est que lors de la commande de déclenchement des disjoncteurs, qui correspond à la position purge, il faut que le délai d'actionnement soit le plus faible possible de l'ordre de la milliseconde. En conséquence, la course entre la position purge fermée et admission fermée est de l'ordre de quelques 1/10 de mm (de l'ordre du 1/4 du diamètre de l'orifice des sièges de clapets), ce qui diminue d'ailleurs la fuite pendant le passage des positions intermédiaires entre position admission et position purge (valve à centre ouvert).

En conclusion, une telle valve classique, en cas de disparition de la pression de la source haute pression, prend naturellement une position stable, qui est la position "purge".

Dans de nombreuses commandes hydrauliques de disjoncteur, on utilise, pour actionner le contact mobile du disjoncteur, un vérin différentiel dans lequel la chambre annulaire du vérin est soumise en permanence à la haute pression de la source, de façon à solliciter en permanence le disjoncteur vers sa position ouverte. Un exemple d'une telle commande hydraulique a été décrit et représenté dans le brevet FR-A 2 317 532 déposé le 7 juillet 1975 (ou US-A 4 026 523).

Mais, comme on le verra plus en détail dans la description qui suit, ce type de valve connue, lorsqu'il est utilisé pour contrôler l'alimentation/purge d'un tel vérin différentiel, entraîne certains inconvénients de fonctionnement (manoeuvre lente) pour les disjoncteurs, en cas de baisse ou d'annulation de la pression de la source de pression.

On doit donc, en général, prévoir un système de commande de déclenchement automatique du disjoncteur en cas de baisse de pression en-dessous d'un certain seuil, de façon à éviter toute manoeuvre lente du disjoncteur.

Mais, dans certains réseaux de distribution électrique, il n'est pas accepté que de tels déclenchements automatiques des disjoncteurs se produisent et on préfère, au contraire, que les disjoncteurs soient maintenus en position fermée.

C'est pourquoi on a parfois prévu des systèmes de verrouillage en position fermée des disjoncteurs euxmemes, mais ceci est compliqué du point de vue de la réalisation et diminue en fait la sécurité. Il a été proposé également des dispositifs pour empêcher dans certains cas la valve de revenir à sa position de repos (position purge, correspondant à la position ouverte du disjoncteur), notamment en cas de baisse de pression de la source, mais de tels dispositifs sont d'une réalisation délicate et d'un fonctionnement peu sûr, en particulier à cause de la faible course indiquée ci-dessus des clapets.

La présente invention a pour but de remédier à ces inconvénients grâce à une valve à trois voies qui a deux positions stables, position de purge et position d'admission.

L'invention a pour objet une valve hydraulique à trois voies à centre ouvert, comportant un clapet d'admission et un clapet de purge qui sont physiquement indépendants mais qui coopèrent entre eux en poussée, le clapet d'admission étant sollicité vers la position fermée par un ressort et le clapet de purge étant actionné vers la position fermée par un vérin hydraulique pilote, ladite valve étant caractérisée : en ce que le clapet de purge est également soumis à l'action d'un deuxième ressort, la sollicitant également vers la position fermée en opposition au premier ressort du clapet d'admission, ledit deuxième ressort étant prépondérant par rapport audit premier ressort de façon à tendre à maintenir la valve en position admission en l'absence de pression hydraulique ; et en ce que le clapet de purge est pourvu d'un mécanisme de semi-verrouillage élastique à résistance limitée qui retient ledit clapet de purge en position ouverte, à l'encontre de la force seule du deuxième ressort tendant à fermer ledit clapet, mais qui libère ledit clapet vers la position fermée sous l'effet conjoint dudit deuxième ressort et de la poussée du vérin hydraulique pilote.

Grâce à ces dispositions on réalise une valve bistable qui peut rester dans celle de ses positions (admission ou purge) où elle a été amenée volontairement par son vérin hydraulique pilote.

L'invention sera mieux comprise à la lecture de la description qui suit et à l'examen des dessins annexés. Sur ces dessins :

la figure 1 est une représentation schématique d'une commande hydraulique de disjoncteur à laquelle s'applique la valve de l'invention,

la figure 2 est une vue en coupe de la valve de l'invention en position purge,

la figure 3 est une vue en coupe de la même valve en position admission.

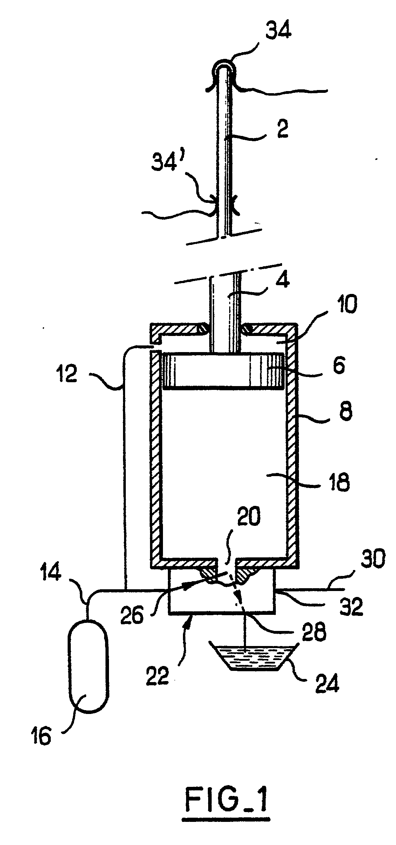

Une commande hydraulique de disjoncteur, à laquelle s'applique la valve suivant l'invention, a été schématiquement représentée sur la figure 1.

Le contact mobile 2 du disjoncteur est attelé à la tige sortante 4 du piston 6 d'un vérin différentiel 8. La chambre annulaire 10 du vérin différentiel est reliée en permanence, par des canalisations 12, 14 à un accumulateur oléo-pneumatique 16 constituant la source haute pression.

La chambre principale 18 du vérin comporte un orifice d'admission/purge 20 qui peut être relié sélectivement par une valve à trois voies 22 soit à l'accumulateur 20 soit à un réservoir à basse pression 24. Dans la première configuration, la valve 22 établit la communication entre l'orifice 20 et un orifice d'admission 26 de la valve (position admission, indiquée en traits pleins) ; dans la deuxième configuration, la valve 22 établit la communication entre l'orifice 20 et un orifice de purge 28 de la valve (position purge, indiquée en traits interrompus).

La commutation de la valve 22, de l'une à l'autre de ses positions, est assurée par un circuit hydraulique de contrôle 30 qui aboutit à une entrée de contrôle 32 de la valve 22.

Dans la position représentée sur la figure I, la valve est en position admission, le disjoncteur est en position fermée, le contact mobile 2 réunissant les contacts fixes 34, 34'. Pour amener le disjoncteur en position ouverte, il suffit de mettre la valve 22 en position purge, la haute pression régnant dans la chambre 10 repoussant le piston 6 et éloignant le contact mobile 2 du contact fixe 34.

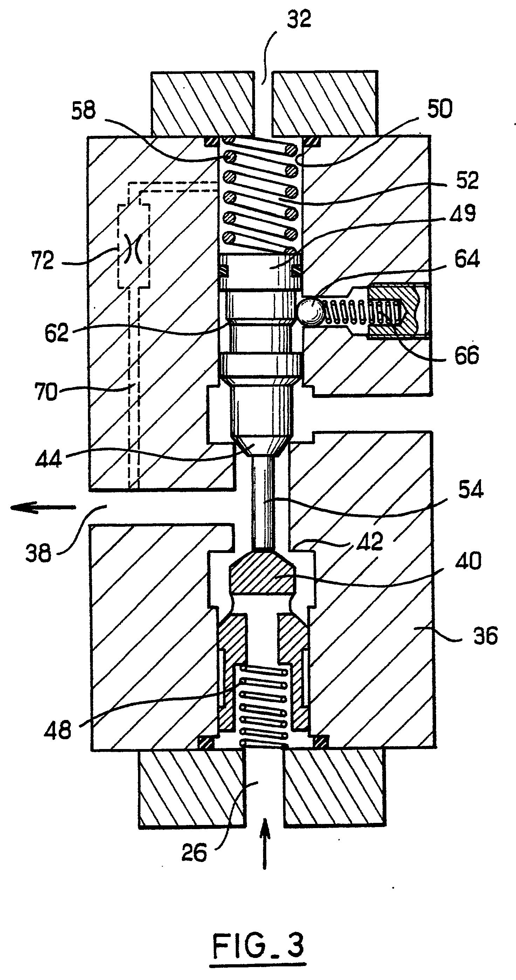

Une commande hydraulique de ce genre, pour disjoncteurs, est bien connu et a été représenté par exemple (figure 3) dans le brevet FR-A 2 317 532 déposé le 7 juillet 1975 (ou US-A 4 026 523).

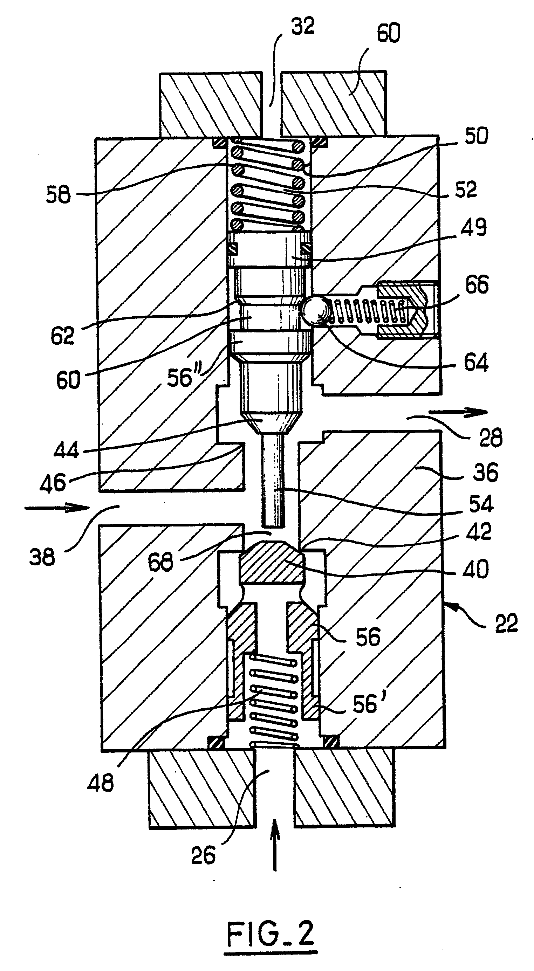

La valve 22 représentée en coupe sur la figure 2 comprend les éléments suivants qui sont connus : un corps de valve 36 comportant différents perçages qui définissent un orifice d'utilisation 38, ou orifice admission/purge qui est relié à l'orifice admission/purge 20 du vérin 8 (figure 1), un orifice d'admission 26, un orifice de purge 28 et un orifice de pression de contrôle 32.

Dans un perçage axial du corps de valve 36, sont logés un clapet d'admission 40, qui coopère avec un siège 42, et un clapet de purge 44, qui coopère avec un siège 46.

Le clapet d'admission 40 est sollicité vers la position fermée par un ressort 48. Le clapet de purge 44 est solidaire d'un piston 49 coulissant dans un perçage 50 constituant le cylindre du vérin pilote hydraulique de la valve. La chambre 52 du vérin pilote reçoit, par l'orifice 32, le signal de contrôle (haute pression ou basse pression) émis par le circuit de contrôle 30.

Comme on le voit sur la figure 2, les deux clapets 40 et 44 sont deux pièces physiquement indépendantes qui n'agissent l'une sur l'autre qu'en poussée par l'intermédiaire d'une tige de poussée 54 solidaire de l'un des clapets, dans l'exemple le clapet de purge 44.

Il faut noter également que les clapets sont guidés au coulissement dans leurs perçages respectifs par des guidages 56, 56', 56", de façon à s'appliquer parfaitement sur leurs sièges respectifs.

Tous les éléments qui viennent d'être décrits sont les éléments classiques existant dans une valve connue pour la commande des disjoncteurs. On voit que, avec le seul ressort 48 agissant sur le clapet d'admission 40, une telle valve connue vient, au repos, en l'absence de pression, sensiblement dans la position représentée sur la figure 2, c'est-à-dire clapet d'admission 40 fermé et clapet de purge 44 ouvert.

Cependant une telle valve connue, dans le cas où elle est utilisée pour contrôler un vérin différentiel, tel que celui de la figure 1, présente un inconvénient. En effet, le disjoncteur étant dans la position fermée, s'il se produit une baisse de pression de la source haute pression (par exemple du fait d'une fuite), le disjoncteur reste en position fermée puisque la même pression (bien qu'inférieure à la haute pression normale) s'exerce sur les deux faces du piston 6 du vérin principal 8 (figure 1). Si la pression vient à s'annuler, la valve sous l'effet du ressort de rappel du clapet d'admission revient à sa position de repos, c'est-à-dire la position purge (clapet d'admission fermé, clapet de purge ouvert).

Dans cette condition, lorsqu'on remet le circuit hydraulique en pression, la pression s'établit seulement, dans le vérin différentiel 8 (figure 1), dans la chambre annulaire 10 puisque la chambre principale 18 est mise à la purge par la valve 22, ce qui fait que le disjoncteur passe lentement de sa position fermée à sa position ouverte, ce qui est inadmissible et nécessite donc de prévoir un système de sécurité tel qu'une commande de déclenchement automatique en cas de baisse de pression.

La valve suivant l'invention comporte, en plus des éléments connus qui viennent d'être décrits, un deuxième ressort 58 qui prend appui d'une part contre une partie 60 du corps de valve et contre la face supérieure du piston pilote 49 pour solliciter le clapet de purge 44 vers la position fermée. Ainsi chacun des deux clapets (40, 44) est soumis à l'action d'un ressort (48, 58) tendant à l'appliquer sur son siège, mais, suivant l'invention, le ressort 58 du clapet de purge 44 est plus fort que le ressort 48 du clapet d'admission, ce qui fait que l'ensemble des clapets tend à prendre la position stable représentée sur la figure 3 avec le clapet de purge 44 fermé et le clapet d'admission 40 ouvert.

D'autre part, la valve suivant l'invention comporte un mécanisme de semi-verrouillage élastique du clapet de purge. Ce mécanisme présente une résistance limitée adaptée à retenir le clapet de purge 44 en position ouverte (voir figure 2), à l'encontre de la force du ressort 58 qui tend à le fermer, en l'absence de pression hydraulique de contrôle sur le piston 49 du vérin pilote 50. Mais cette résistance est insuffisante pour retenir le clapet de purge en position ouverte lorsque celui-ci est soumis, en plus de l'action du ressort 58, à la poussée du piston pilote, ce qui amène le clapet de purge 44 en position fermée (voir figure 3) et, par conséquent, le clapet d'admission 40 en position ouverte.

Suivant le mode de réalisation représenté sur les figures 2 et 3, ce mécanisme de semi-verrouillage comprend, d'une part, sur la tige 60 du clapet de purge 44, une rampe 62 et, d'autre part, dans le corps de valve 36 un poussoir élastique, constitué de préférence par une (ou plusieurs) bille(s) 64 appliquée(s) par un ressort 66 contre la tige 60 du clapet de purge.

Le fonctionnement de la valve ressort suffisamment de ce qui précède pour qu'il suffise d'indiquer que, dans la position purge (figure 2), qui correspond à la position ouverte du disjoncteur, il n'y a pas de pression dans la chambre 52 du vérin pilote et que le clapet de purge 44 est retenu en position ouverte par l'appui de la rampe 62 contre la bille 64, la force du ressort 58 seule étant insuffisante pour surmonter la résistance de la bille 64 contre la rampe. Le clapet de purge étant ouvert, il laisse remonter, sous l'effet de son ressort 48, le clapet d'admission 40 qui est ainsi fermé.

Pour fermer le disjoncteur, on envoie l'ordre de pression dans le vérin pilote. L'effet conjugué de la pression sur le piston pilote 49 et du ressort 58 fait que la rampe 62 peut surmonter la force exercée sur la bille 64 par le ressort 66. Le clapet de purge 44 vient donc en position fermée (figure 3) et repousse le clapet d'admission 40, à l'encontre de son ressort 48, par poussée de l'extrémité de la tige 54. Le clapet d'admission est donc ouvert et la haute pression, admise par l'orifice d'admission 26, est transmise, par l'orifice d'utilisation 38, à la chambre principale 18 du vérin différentiel 8 (figure 1). Le disjoncteur vient donc en position fermée.

Pour commander le déclenchement du disjoncteur, la chambre 52 du vérin pilote 50 est mise à la purge par le circuit de contrôle 30. La haute pression régnant dans le circuit d'utilisation repousse énergiquement l'ensemble "clapet de purge-piston du vérin pilote" à l'encontre du ressort 58. Le piston recule jusqu'à sa butée de fin de course (par exemple par venue en butée du guidage 56" contre la bille ou tout autre système de limitation de course) et le clapet de purge 44 reste en position ouverte, du fait de l'accrochage de la rampe 62 contre la bille 64. Simultanément, le clapet d'admission 40, libéré de la poussée du clapet de purge, se ferme sous l'action combinée de la haute pression et de son ressort de rappel 48 (figure 3). La chambre principale 18 du vérin différentiel 8 (figure 1) est ainsi mise à la purge et le contact mobile du disjoncteur est ramené en position ouverte sous l'effet de la haute pression permanente régnant sur la face annulaire du piston 6.

Dans le cas où, lorsque le disjoncteur est en position fermée (valve en position admission, figure 3), il se produit une baisse lente de la pression dans le circuit hydraulique, la pression baisse également dans le vérin pilote 50, mais les clapets 44 et 40 restent dans la même position, grâce à la force du ressort prépondérant 58 du clapet de purge. Le vérin différentiel 8 n'est donc pas mis à la purge et le disjoncteur reste en position fermée.

A la remise en pression du circuit hydraulique, la valve étant en position admission, la chambre principale 18 du vérin différentiel est alimentée en même temps que la chambre annulaire 10 de ce vérin, si bien qu'il n'y a pas de risque d'ouverture lente du disjoncteur, comme c'était le cas avec une valve à trois voies connue.

On voit donc qu'il n'y a pas à prévoir de système de commande de déclenchement automatique du disjoncteur en cas de baisse de pression, ni dispositif inhibiteur de ce système pour maintenir le disjoncteur en position fermée.

La valve suivant l'invention présente donc deux positions (admission et purge) stables.

L'une des difficultés de la réalisation d'un verrouillage des clapets, dans une valve à trois voies pour la commande des disjoncteurs, provenait du fait que la levée des clapets est très faible (pour obtenir une réponse très rapide), comme cela a été rappelé dans l'introduction de la présente description.

Dans une valve suivant l'invention, il faut bien noter que les deux clapets sont des pièces séparées et que le mécanisme de semi-verrouillage agit sur le clapet de purge seul.

Tout en respectant la condition de la faible levée du clapet d'admission 40 nécessaire pour obtenir un faible délai de déclenchement du disjoncteur, le déplacement du clapet de purge 44 peut être relativement important ce qui permet d'établir sans compromis délicats un mécanisme de semi-verrouillage fiable de l'ensemble clapet de purge, piston du vérin pilote; pour l'enclenchement, il n'y a pas de délai impératif, la seule condition à réaliser est que ce délai soit constant.

C'est pourquoi on prévoit, comme on peut le voir sur les figures 2 et 3, une course plus importante pour le clapet de purge 44 que pour le clapet d'admission 40 et c'est pourquoi il existe, en position de purge (figure 2) un jeu, ou course morte, 68 entre l'extrémité de la tige de poussée 64 du clapet de purge et le sommet du clapet d'admission 40.

Dans les commandes hydrauliques pour disjoncteurs électriques, auxquelles s'applique plus particulièrement la valve suivant l'invention, l'ordre de mise en pression (ou de mise hors pression) appliqué au vérin pilote 50, 49 de la valve à trois voies est seulement un signal fugitif qui est ensuite maintenu par un circuit hydraulique dit "circuit d'auto-maintien". Un tel circuit d'automaintien est bien connu et a été décrit dans le brevet précité FR-A 1 098 565 (ou US-A 2 900 960). Ce circuit peut être incorporé à la valve suivant l'invention, comme il a été représenté en traits interrompus sur la figure 3, et comprend une canalisation 70 sur laquelle est interposé un limiteur de débit 72, ladite canalisation 70 mettant en communication la conduite d'utilisation 38 de la valve avec la chambre 52 du vérin pilote 50,49.

## Revendications

1. Valve hydraulique à trois voies à centre ouvert, notamment pour circuit hydraulique de commande d'un disjoncteur électrique dont le contact mobile est actionné par un vérin différentiel, qui comprend un clapet d'admission (40) et un clapet de purge (44), physiquement indépendants et réagissant l'un sur l'autre en poussée, ledit clapet d'admission étant sollicité vers la position fermée par un ressort (48) et ledit clapet de purge étant actionné vers la position fermée par la mise en pression d'un vérin hydraulique pilote (49, 50), ladite valve étant caractérisée : en ce qu'elle comporte un deuxième ressort (58) agissant sur le clapet de purge (44) pour solliciter ledit clapet vers la position fermée ; en ce que ledit deuxième ressort (58) est plus fort que le premier ressort (48) ; et en ce qu'il est prévu, sur le clapet de purge, un mécanisme de semiverrouillage élastique à résistance limitée (62, 64, 66) qui est adapté à retenir le clapet de purge en position ouverte, à l'encontre de l'action du deuxième ressort (58), en l'absence de pression hydraulique dans le vérin pilote (49, 50), et qui est adapté à libérer ledit clapet jusqu'à sa position fermée lorsque ledit clapet est soumis à la fois à l'action du deuxième ressort (58) et à l'action du vérin pilote mis en pression.

2. Valve suivant la revendication l, caractérisée en ce que le mécanisme de semi-verrouillage comprend, sur une tige de liaison (60) réunissant le clapet de purge (44) au piston (49) du vérin pilote (49, 50), une rampe en saillie (62) et comprend au moins un poussoir élastique (64, 66), porté par le corps (36) de ladite valve, coopérant avec ladite rampe.

3. Valve suivant la revendication 2, caractérisée en ce que le poussoir précité comprend au moins une bille (64) sollicitée vers la tige de liaison (60) du clapet de purge (44) par un ressort (66).

4. Valve suivant l'une quelconque des revendications précédentes, caractérisée en ce que la course de déplacement du clapet de purge (44) est plus grande que celle du clapet d'admission (40).

5. Valve suivant la revendication 4, caractérisée en ce que le clapet de purge (44) agit en poussée sur le clapet d'admission (40) par l'intermédiaire d'une tige de poussée (54) solidaire de l'un des clapets (44) et en ce que, dans la position "purge" de la valve, l'extrémité de la tige de poussée est éloignée de l'autre clapet (40) d'un intervalle (68).

6. Valve suivant l'une quelconque des revendications précédentes, caractérisée en ce qu'un circuit d'auto-maintien (70, 72) est incorporé au corps (36) de ladite valve.

## Patentansprüche

1. Hydraulisches Drei-Wege-Ventil mit offenem Zentrum, insbesondere für einen hydraulischen Steuerkreislauf für einen elektrischen Ausschalter, dessen beweglicher Kontakt durch einen Differentialzylinder betätigt wird, welcher eine Einlaßklappe (40) und eine Auslaßklappe (44) enthält, die äußerlich voneinander unabhängig sind und aufeinander durch Schubwirkung reagieren, wobei die genannte Einlaßklappe durch eine Feder (48) in Richtung auf die geschlossene Position beansprucht und die genannte Auslaßklappe durch Druckbeaufschlagung eines hydraulischen Vorsteuerzylinders (49, 50) in Richtung auf die geschlossene Position betätigt wird, wobei das genannte Ventil dadurch gekennzeichnet ist, daß es eine zweite Feder (58) enthält, die auf die Auslaßklappe (44) einwirkt, um diese Klappe in Richtung auf die geschlossene Stellung zu bewegen, daß die genannte zweite Feder (58) stärker ist als die erste Feder (48) und daß an der Auslaßklappe eine elastische Halbverriegelungsvorrichtung mit begrenztem Widerstand (62, 64, 66) vorgesehen ist, mit deren Hilfe die Auslaßklappe in offener Stellung, gegen die Wirkung der zweiten Feder (58), festgehalten werden kann, wenn sich im Vorsteuerzylinder (49, 50) kein hydraulischer Druck befindet, und mit deren Hilfe die genannte Klappe bis zur geschlossenen Stellung freigegeben werden kann, wenn die genannte Klappe gleichzeitig der Wirkung der zweiten Feder (58) und der Wirkung des druckbeaufschlagten Vorsteuerzylinders ausgesetzt ist.

2. Ventil nach Anspruch 1, dadurch gekennzeichnet, daß die Halbverriegelungsvorrichtung an der Verbindungsstange (60), die die Auslaßklappe (44) mit dem Kolben (49) des Vorsteuerzylinders (49, 50) verbindet, eine vorspringende Rampe (62) und wenigstens einen elastischen Stößel (64, 66) enthält, der auf dem Körper (36) des genannten Ventils aufliegt und mit der genannten Rampe zusammenwirkt.

3. Ventil nach Anspruch 2, dadurch gekennzeichnet, daß der vorgenannte Stößel wenigstens eine Kugel (64) enthält, die durch eine Feder (66) in Richtung auf die Verbindungsstange (60) der Auslaßklappe (44) beansprucht wird.

4. Ventil nach einem der vorherigen Ansprüche, dadurch gekennzeichnet, daß der Verschiebeweg der Auslaßklappe (44) größer ist als derjenige der Einlaßklappe (40).

5. Ventil nach Anspruch 4, dadurch gekennzeichnet, daß die Auslaßklappe (44) auf die Einlaßklappe (40) eine Schubwirkung mittels einer Schubstange (54) ausübt, die fest mit einer der Klappen (44) verbunden ist und daß das Ende der Schubstange in «Auslaß»-Stellung des Ventils von der anderen Klappe (40) durch einen Zwischenraum (68) getrennt ist.

6. Ventil nach einem der vorherigen Ansprüche, dadurch gekennzeichnet, daß der Körper (36) des genannten Ventils einen Selbsthaltekreislauf (70, 72) enthält.

## Claims

1. An open-center three-way hydraulic valve in particular for the hydraulic control circuit of an electric circuit-breaker in which the moving contact is actuated by a differential jack, comprising an admission valve-head (40) and a drain valve-head (44) which are physically independent but interact with each other in a movement of thrust, said admission valve-head being urged toward the closed position by a spring (48) and said drain valve-head being actuated toward the closed position by pressurization of a hydraulic pilot jack (49, 50), said valve being characterized in that said valve has a second spring (58) which produces action on the drain valve-head (44) so as to urge said valve-head to the closed position; said second spring (58) is more powerful than the first spring; and provision is made on the drain valve-head for a resilient semi-locking mechanism (62, 64, 66) having limited resistance which is adapted to retain the drain valve-head in the open position in opposition to the action of the second spring (58) in the absence of hydraulic pressure within the pilot jack (49, 50) and which is adapted to release said valve-head up to its closed position when said valve-head is subjected both to the action of said second spring (58) and to the action of the pressurized pilot jack.

2. A valve according to claim 1, wherein the semi-locking mechanism is provided with a projecting ramp (62) on a coupling rod (60) having the function of connecting the drain valve-head (44) to the piston (49) of the pilot jack (49, 50) and is provided with at least one resilient thrust unit (64, 66) carried by the body (36) of said valve and adapted to cooperate with said ramp.

3. A valve according to claim 2, wherein the aforesaid thrust unit includes at least one ball (64) which is urged by a spring (66) toward the coupling rod (60) of the drain valve-head (44).

4. A valve according to claim 1, wherein the drain valve-head (44) has a longer range of travel than the admission valve-head (40).

5. A valve according to claim 4, wherein the drain valve-head (44) exerts thrust on the admission valve-head (40) by means of a push-rod (54) rigidly fixed to one of the valve-heads (44) and wherein the extremity of the push-rod is located at a distance (68) from the other valve-head (40) in the drain position of the valve.

6. A valve according to claim 1, wherein a self-maintaining circuit (70–72) is incorporated in the valve body (36).

## FIG_1

FIG_2

FIG_3